# FASCICULE DE BREVET EUROPEEN

(11) **EP 0 436 407 B1**
(45) Date de publication et mention de la délivrance du brevet: **21.07.1993**
(21) Numéro de dépôt: 90403063.2
(22) Date de dépôt: 30.10.1990
(51) Int. Cl.: B60G 11/08, F16F 1/36

(54) **Structure de guidage de roue**
Radführungsanordnung
Wheel guiding structure

(30) Priorité: 05.01.1990 FR 9000072
(43) Date de publication de la demande: 10.07.1991
(73) Titulaire: REGIE NATIONALE DES USINES RENAULT S.A., 92109 Boulogne Billancourt (FR)
(72) Inventeur: Delmas, Jean Paul, F-78490 Montfort l'Amaury (FR); Demaldent, Jean-Michel, F-78500 Sartrouville (FR)

(56) Documents cités:
- EP-A- 0 243 102
- EP-A- 0 251 850
- WO-A-87/01339
- DE-B- 1 190 810
- US-A- 4 613 152

## Description

La présente invention concerne une structure de guidage de roue pour un train avant de type "faux MAC PHERSON" à éléments intégrés comportant une lame de ressort transversale et destiné plus particulièrement aux véhicules automobiles et utilisant un ressort en forme de lame en matériau composite qui assure les fonctions de ressort de suspension, de stucture support de train, de guidage de roue, ainsi que de barre anti-dévers.

On connaît l'utilisation d'une lame rectiligne en matériau composite capable d'assurer la fonction ressort de la suspension, mais généralement sa construction avec des fibres unidirectionnelles s'étendant parallèlement à sa grande dimension et son mode de fixation, sur la structure du véhicule, par des appuis glissant permettant de compenser son débattement, n'autorisent pas le contrôle de la trajectoire de la roue sous effort.

De tels systèmes ne sont pas compatibles avec les contraintes d'architecture des véhicules modernes. En effet, l'implantation de moteurs transversaux sous des capots moteurs dont la ligne s'abaisse de plus en plus pour satisfaire les critères de style et d'aérodynamisme, impose que la lame de ressort ne soit pas implantée au droit des roues pour ne pas augmenter l'encombrement vertical.

Une structure de guidage de roue selon le préambule de la revendication 1 est connue, par exemple du EP-A-0 243 102.

L'invention décrite a pour objet la réalisation d'une structure qui permet, par rapport à un système traditionnel de type "faux MAC PHERSON" de :
- diminuer le poids de façon significative,
- diminuer le nombre de pièces en intégrant la fonction berceau, la fonction guidage et la fonction ressort à lame en matériau composite,
- d'assurer un effet anti-dévers par la constitution et le mode de fixation de la lame transversale,
- de maîtriser le filtrage longitudinal et transversal des mouvements de la roue tout en assurant un guidage correct de la roue. Ceci est rendu possible par la forme, le choix des points d'attache et préférablement par l'orientation des fibres de renfort au sein de la lame composite ainsi qu'au comportement viscoélastique de celle-ci, une conséquence directe de ces propriétés étant la disparition d'une partie des blocs de caoutchouc assurant habituellement le filtrage.

Les figures annexées illustrent l'invention :
- La figure 1 représente une structure de guidage selon l'état de la technique avec une lame de ressort transversal,
- La figure 2 représente une structure de guidage selon l'invention vue en perspective,
- La figure 3 représente une coupe selon un plan vertical passant par l'axe longitudinal de la partie avant de la structure,
- La figure 4 représente une lame de ressort en matériau composite avec l'implantation des fibres de renfort,
- La figure 5 représente la même lame de ressort en matériau composite avec les axes fictifs de déformation de la lame,
- La figure 6 représente la même lame de ressort en matériau composite qui montre le sens de déplacement des extrémités de la lame,
- La figure 7 représente le sens des efforts de propulsion et de freinage appliqués aux extrémités de la même lame,
- La figure 8 représente le sens des efforts de ripage appliqués aux extrémités de la même lame.

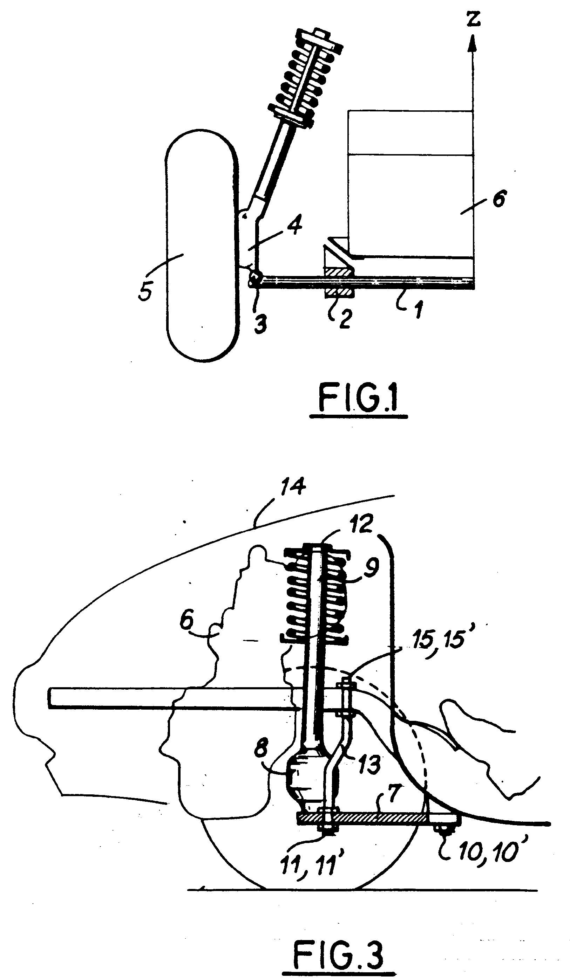

Un train avant de technologie traditionnelle du type "faux MAC PHERSON" avec une lame de ressort en matériau composite est représenté sur la figure 1.

La lame 1 en matériau composite rectangulaire avec des fibres unidirectionnelles s'étendant parallèlement à la grande dimension, est fixée à la structure du véhicule par des appuis glissants 2. La seule attache du porte-roue 4 sur ladite lame avec la rotule 3 ne permet pas de bien contrôler le débattement de la roue 5 sous effort. Le groupe moto-propulseur 6 qui est placé au-dessus de la lame 1, occupe une position naturellement haute dans la structure avant du véhicule.

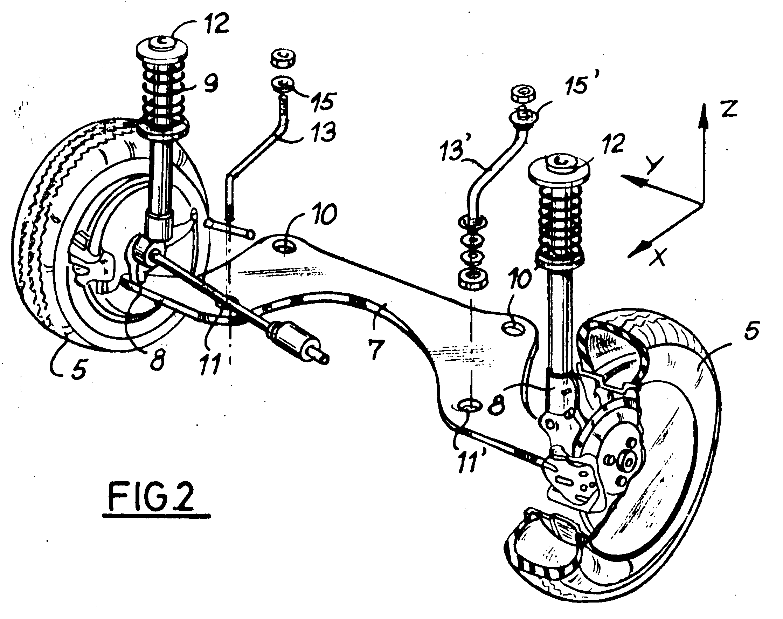

La figure 2 qui représente une vue en perspective d'une structure préférée selon l'invention, est constituée des éléments suivants :
- Une lame 7 réalisée en matériau composite constituée de renforts 17 comme des fibres ou des tissus, enrobés dans une résine qui assure le rôle de liant, et qui s'étendent transversalement entre les roues avant 5 d'un véhicule automobile. Cette lame 7, si on se réfère à des systèmes de train avant de technologie traditionnelle, réalise les fonctions de ressort de suspension, de structure support de train, de guidage des roues, ainsi que de barre anti-dévers,
- Deux porte-fusée 8,
- Deux jambes de force portant les amortisseurs 9.

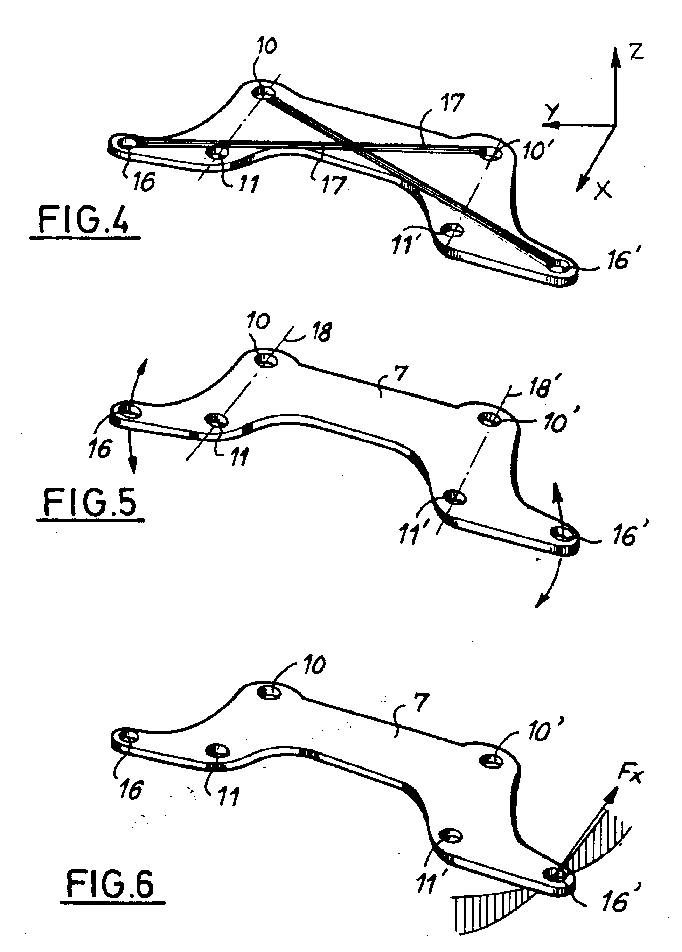

Cet ensemble d'éléments qui forment la structure de guidage de roues est lié à la caisse de la façon suivante :
- Deux points de fixation arrière 10 et 10' permettent de fixer la lame 7 à la structure de la caisse et sont construits de façon a immobiliser la lame 7 dans les trois directions X, Y, Z (longitudinale, latérale, hauteur),
- Deux points de fixation avant 11 et 11' permettent de fixer la lame 7 à la structure de la caisse de façon a bloquer les mouvements de ladite lame suivant la direction Z (hauteur) tout en laissant une légère libertée dans les directions X et Y (longidutinale et latérale) grâce à l'emploi de biellettes 13 montées sensiblement verticalement et qui relient, par des fixations non infiniment rigides, les points 11, 11' de la lame 7 à la structure en 15, 15',
- Les points 10, 11 et 10', 11' appartiennent à deux droites symétriques 18, 18' par rapport à l'axe longitudinal de la voiture, positionnées entre ledit axe longitudinal et les extrémités 16, 16' de la lame 7,
- Deux points de fixation 12 permettent de fixer les attaches supérieures d'amortisseurs à la caisse comme on le voit sur la figure 3, la forme en oméga ( Ω ) de la lame 7 permet de s'affranchir des problèmes d'architecture, en contournant l'encombrement du groupe moto-propulseur 6 par l'arrière, ce qui n'entraîne pas d'empilage vertical qui empêcherait l'abaissement du capot avant 14. On voit très bien sur cette figure la forme particulière de la lame 7 qui permet la fixation en quatre points 10, 10' et 11 , 11' sous la caisse, ce qui allège la structure avant du véhicule. On voit très bien les fixations arrières 10, 10' de la lame 7 sur la structure ainsi que les biellettes 13, 13' qui sont fixées en 11, 11' à la partie avant de ladite lame et en 15, 15' sur la structure.

La figure 4 montre que pour assurer un guidage du plan de roue satisfaisant, les renforts nécessaires à la rigidité de la lame 7 sont orientés de telle façon que l'on puisse s'appuyer sur les points de fixations 10, 10' de la caisse. Il en résulte, ainsi que représenté sur la figure 4, que les nappes de tissus de renfort forment entre eux un angle déterminé par les droites reliant les points 16 à 10' et 16' à 10 (16 et 16' étant sensiblement les projections des axes de rotule sur la lame).

La valeur de cet angle est dépendant de la voie avant du véhicule (V) et de la position des fixations.

Cette orientation permet donc de donner un sens de raideur privilégiée à la pièce, permettant de bénéficier d'une rigidité satisfaisante lorsque l'on applique des efforts à la roue et donc aux points 16 et 16'.

Cette orientation privilégiée des caractéristiques mécaniques de la pièce, combinée avec celles des points de fixations en 10, 10', 11, 11' autorise de satisfaire à la fois aux contraintes de confort de suspension et de guidage de la roue sous effort.

Le débattement de la suspension est obtenu par déformation de la lame 7 autour d'axes fictifs 18 et 18' passant par 10, 11 et 10', 11' ainsi que représenté sur la figure 5.

Le filtrage des chocs longitudinaux subis par la roue est obtenu par déformation de la lame, celle-ci s'arc-boutant sur les points 10 et 10'. La position des points 16 ou 16', lorsque la lame est déformée, se situe dans une zone située entre la trajectoire décrite par le segment 10' 16, et celle décrite par 10, 16' ainsi que représenté sur la figure 6. La déformée de la lame 7 au niveau des points 16, 16' est déterminée par la rigidité de celle-ci, de façon à ce que la trajectoire décrite par le point 16 soit similaire à celle décrite par le point de liaison de la biellette de direction sur le porte moyeu, afin de ne pas engendrer de réactions parasites dans le système de direction.

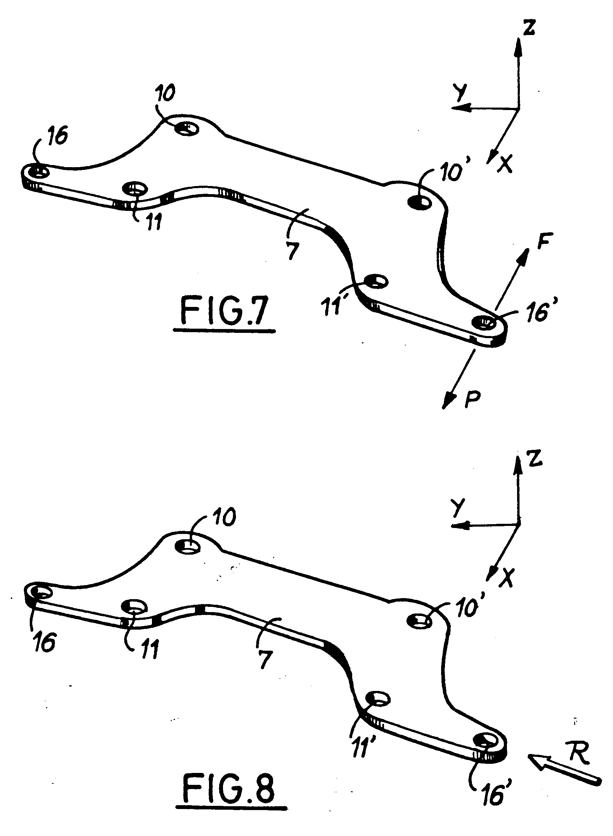

Le comportement de la lame sous effort de propulsion "P" et de freinage "F" (figure 7) est similaire à celui nécessaire au filtrage des chocs longitudinaux. La géomètrie générale du train est déterminée de sorte que le mouvement final du plan de roue sous ces efforts entraîne une trajectoire du point 16 ou 16' vers l'avant et l'intérieur du véhicule, entraînant une augmentation de l'angle de pince favorable à la stabilité de celui-ci.

Lorsque la lame 7 est soumise à un effort de ripage "R" (figure 8), celle-ci est sollicitée dans une direction où sa raideur est grande et compte tenu des déplacements bloqués par les points de fixation 11, 11', 10, 10', en obtient une déformation déterminée de celle-ci, tendant à faire rentrer les points 16 ou 16' vers l'intérieur du véhicule, provoquant une prise de pince.

## Revendications

1. Structure de guidage de roue pour un train avant de type "faux MAC PHERSON" intégré comportant une lame de ressort transversale, et destiné plus particulièrement aux véhicules automobiles dont l'extrémité inférieure de chaque porte-fusée (8) est fixée par une rotule à chaque extrémité (16, 16') d'une lame transversale (7) qui sert de ressort de suspension à la voiture, caractérisé en ce que la lame (7) est fixée en quatre points :
- deux points de fixation arrière (10, 10') directement liés à la structure de façon à immobiliser la lame (7) dans les directions longitudinale, latérale et verticale (X,Y,Z),
- deux points de fixation avant (11, 11') liés à la structure grâce à deux biellettes (13, 13') montées sensiblement verticalement avec des liaisons (11, 11') sur la lame (7) et sur la structure (15, 15') non infiniment rigides de façon à immobiliser la lame (7) dans la direction verticale (Z) tout en laissant une légère liberté dans les directions longitudinale et latérale (X,Y).

2. Structure de guidage de roue suivant la revendication 1, caractérisé en ce que les points de fixation avant et arrière (10, 11 et 10', 11') appartiennent à deux axes fictifs (18, 18') symétriques par rapport à l' axe longitudinal de la voiture et positionnés entre ledit axe longitudinal et les extrémités (16, 16') de la lame (7).

3. Structure de guidage de roue suivant les revendications 1 et 2, caractérisé en ce que la lame (7) qui est réalisée en matériau composite possède des renforts (17) constitués de fibres ou de nappes de tissus qui forment entre eux un angle (α) déterminé par leur positionnement dans des directions qui relient le point de fixation de rotule (16) situé d'un côté de la lame au point de fixation arrière (10') situé de l'autre côté de la lame et le point de fixation de rotule (16') situé dudit autre côté de la lame au point de fixation arrière (10) situé dudit un côté de la lame.

4. Structure de guidage de roue suivant les revendications 1, 2 et 3, caractérisé en ce que la lame (7) a une forme en oméga qui lui permet de contourner par l'arrière le groupe moto-propulseur (6).

## Patentansprüche

1. Radführungsanordnung für eine Vorderachse vom integrierten falschen Mac Pherson-Typ, mit einer Querblattfeder, die insbesondere für Kraftfahrzeuge bestimmt ist, wobei das untere Ende eines jeden Achsschenkelträgers (8) über ein Kugelgelenk mit jedem Ende (16, 16') eines Querblattes (7) verbunden ist, das als gefederte Aufhängung für das Fahrzeug dient, dadurch gekennzeichnet, daß das Blatt (7) an vier Stellen befestigt ist:
- zwei hinteren Befestigungsstellen (10, 10'), die direkt mit der Anordnung derart verbunden sind, daß sie das Blatt (7) in der Längs-, Quer- und Hochrichtung (X, Y, Z) festlegen;
- zwei vorderen Befestigungsstellen (11, 11'), die über zwei Schwingarme (13, 13') mit der Anordnung verbunden sind, die mit den Befestigungsstellen (11, 11') sich im wesentlichen senkrecht zum Blatt (7) und zur Anordnung (15, 15') erstrecken und die nicht unendlich steif sind, um derart das Blatt (7) in der Hochrichtung (Z) festzulegen und gleichzeitig eine geringe Beweglichkeit in den Längs- und Querrichtungen (X, Y) zu ermöglichen.

2. Radführungsanordnung nach Anspruch 1, dadurch gekennzeichnet, daß die vorderen und hinteren Befestigungsstellen (10, 11 und 10', 11') zu zwei gedachten symmetrisch zur Längsachse des Fahrzeuges verlaufenden Achsen (18, 18') gehören, welche sich zwischen der Längsachse und den Enden (16, 16') des Blattes (7) erstrecken.

3. Radführungsanordnung nach Ansprüchen 1 und 2, dadurch gekennzeichnet, daß das Blatt (7), welches aus zusammengesetztem Material hergestellt ist, Verstärkungen (17) aufweist, die aus Fasern oder Gewebebändern bestehen, welche zwischen sich einen Winkel (α) einschließen, der durch ihre Anordnung in denjenigen Richtungen bestimmt wird, welche die Befestigungsstelle des Kugelgelenks (16) auf der einen Seite des Blattes mit der hinteren Befestigungsstelle (10') auf der anderen Seite des Blattes verbindet sowie die Befestigungsstelle des Kugelgelenks (16') auf der anderen Seite des Blattes mit der hinteren Befestigungsstelle (10) auf der einen Seite des Blattes verbindet.

4. Radführungsanordnung nach Ansprüchen 1, 2 und 3, dadurch gekennzeichnet, daß das Blatt (7) Ω-förmig ausgestaltet ist, so daß es von hinten die Antriebsgruppe (6) umfaßt.

## Claims

1. A wheel guide structure for a front axle of the integrated "false MacPherson" type comprising a transverse spring leaf and adapted in particular to motor vehicles, in which the lower end of each stub axle carrier (8) is secured by a swivel joint to each end (16, 16') of a transverse leaf (7) which acts as a suspension spring for the vehicle, characterized in that the leaf (7) is secured at four points:
- two rear fastening points (10, 10') connected directly to the structure so as to immobilize the leaf (7) in the longitudinal, lateral and vertical directions (X, Y, Z),
- two front fastening points (11, 11') connected to the structure via two crank rods (13, 13') disposed substantially vertically via the connections (11, 11') on the leaf (7) and on the structure (15, 15') which are not totally rigid so as to immobilize the leaf (7) in the vertical direction (2) while leaving some freedom in the longitudinal and lateral directions (X, Y).

2. A wheel guide structure as claimed in claim 1, characterized in that the front and rear fastening points (10, 11) and (10', 11') belong to two fictitious axes (18, 18') symmetrical with respect to the longitudinal axis of the vehicle and positioned between this longitudinal axis and the ends (16, 16') of the leaf (7).

3. A wheel guide structure as claimed in claims 1 and 2, characterized in that the leaf (7) made from composite material comprises reinforcements (17) formed by fibres or fabric webs which form, between one another, an angle (α) determined by their positioning in directions which connect the swivel joint fastening point (16) disposed on one side of the leaf to the rear fastening point (10') disposed on the other side of the leaf and the swivel joint fastening point (16') disposed on the other side of the leaf to the rear fastening point (10) disposed on one side of the leaf.

4. A wheel guide system as claimed in claims 1 to 3, characterized in that the leaf (7) is omega-shaped making it possible for the leaf to surround the motor power unit (6) at the rear.
